**Europäisches Patentamt**

**European Patent Office**

**Office européen des brevets**

(11) Numéro de publication : **0 260 291 B1**

(12) **FASCICULE DE BREVET EUROPEEN**

(45) Date de publication du fascicule du brevet :
**27.05.92 Bulletin 92/22**

(21) Numéro de dépôt : **87901510.5**

(22) Date de dépôt : **04.03.87**

(86) Numéro de dépôt international :
**PCT/FR87/00053**

(87) Numéro de publication internationale :
**WO 87/05189 11.09.87 Gazette 87/20**

(51) Int. Cl.$^5$ : **A23C 3/033, A23L 3/22**

(54) **PROCEDE DE CONDUITE DU TRAITEMENT D'UN PRODUIT FLUIDE, NOTAMMENT D'UN PRODUIT ALIMENTAIRE.**

Le dossier contient des informations techniques présentées postérieurement au dépôt de la demande et ne figurant pas dans leprésent fascicule.

(30) Priorité : **07.03.86 FR 8603281**

(43) Date de publication de la demande :
**23.03.88 Bulletin 88/12**

(45) Mention de la délivrance du brevet :
**27.05.92 Bulletin 92/22**

(84) Etats contractants désignés :
**AT BE CH DE FR GB IT LI LU NL SE**

(56) Documents cités :
**EP-A- 0 118 134**
**DE-A- 2 929 823**
**FR-A- 2 454 141**
**GB-A- 2 131 673**

(73) Titulaire : **INSTITUT NATIONAL DE LA RECHERCHE AGRONOMIQUE**
**145, rue de l'Université**
**F-75341 Paris Cédex 07 (FR)**

(72) Inventeur : **CERF, Olivier**
**314, rue St. Jacques**
**F-75005 Paris (FR)**
Inventeur : **LALANDE, Marc**
**7, allée du Triez**
**F-59650 Villeneuve D'Ascq (FR)**
Inventeur : **FERRET, Robert**
**51, allée de la Courtine**
**F-59650 Villeneuve D'Ascq (FR)**

(74) Mandataire : **Phélip, Bruno et al**
**c/o Cabinet Harlé & Phélip 21, rue de La Rochefoucauld**
**F-75009 Paris (FR)**

## Description

La présente invention concerne la conduite du traitement de produits fluides circulant de façon continue, et notamment de produits alimentaires. Elle s'applique plus précisément à la conduite du traitement d'un tel produit lorsque celui-ci circule dans un organe dont la section de passage varie du fait de son encrassement au cours du traitement.

Bien que l'invention s'applique à la conduite de nombreux procédés de traitement de produits fluides, on la décrit plus précisément dans la suite du présent mémoire dans le cadre du chauffage en écoulement continu de produits alimentaires fluides et plus précisément de lait. Le traitement considéré plus en détail est la stérilisation du lait.

On sait que les produits alimentaires peuvent être altérés par des microorganismes et on les soumet donc habituellement à un traitement, le plus souvent thermique, dont l'objet est de détruire une proportion convenable de microorganismes. Ces derniers disparaissent suivant une fonction exponentielle du temps de traitement et on utilise souvent, comme paramètre représentatif du résultat du traitement, son "efficacité" qui est un nombre E sans dimension, égal au logarithme décimal du rapport des concentrations des microorganismes avant et après le traitement. Plus précisément, l'efficacité E est telle que :

$$E = \log_{10}(C_o/C)$$

$C_o$ et $C$ étant les concentrations avant et après traitement respectivement. Selon la valeur de l'efficacité, on est en présence de traitements de "stérilisation" ou de "pasteurisation".

Selon le traitement envisagé, la concentration initiale des microorganismes, le volume V de chaque récipient dans lequel doit être conditionné le produit, et la proportion P de récipients qui peuvent contenir un ou plusieurs microorganismes survivants, cette proportion étant fixée par des impératifs commerciaux et économiques, permettent alors de déterminer l'efficacité E telle que $E=\log(C_o.V/P)$.

Une fois connues l'efficacité et la vitesse de disparition des microorganismes à une température donnée, il est possible de déterminer, avec l'équation précédente, la durée de traitement nécessaire à l'obtention du résultat voulu. Par exemple, la température du traitement peut être choisie dans un appareil dans lequel le temps de séjour du produit est fixe. Dans une variante, le temps de séjour du produit peut être modifié lorsque la température de traitement est fixée.

Il est donc facile en théorie de déterminer les conditions optimales de traitement thermique des produits alimentaires. Cependant, certains problèmes se posent en pratique.

1. Dans les appareils de chauffage en écoulement continu, le produit traité subit un échauffement puis un refroidissement progressifs. L'efficacité du traitement est donc la somme des efficacités élémentaires tout au long de la zone de traitement. En général, l'efficacité du traitement à toutes les températures et le profil de température subi par le produit traité ne sont pas suffisamment bien connus.

2. Les produits alimentaires forment en général des dépôts sur les parois des organes dans lesquels ils sont traités. Ces dépôts ont deux conséquences, d'une part une réduction des transferts de chaleur entre les parois des échangeurs de chaleur et le produit, et d'autre part la réduction du volume interne des appareils de chauffage, donc de la section de passage du produit et du temps de séjour de celui-ci.

3. Le produit ne circule pas en bloc dans l'organe de traitement mais avec des vitesses différentes dans la section de passage si bien que le temps de séjour du produit varie d'un élément de volume à un autre dans le produit. Cette distribution des temps de séjour n'est en général pas suffisamment connue et elle varie notamment avec l'encrassement des appareils.

En conséquence, on utilise habituellement une température de traitement suffisamment élevée et un débit (déterminant le temps de séjour) suffisamment faible pour que le traitement ait une efficacité suffisante .Cependant, cette manière de procéder n'est manifestement pas optimale, puisque, par exemple, elle donne une efficacité excessivement élevée lorsque l'appareil n'est pas encrassé. Un autre inconvénient de cette manière de procéder est que l'utilisation d'une température trop élevée, au début du traitement, accélère la formation des dépôts, donc l'encrassement et la réduction d'efficacité du traitement.

Par les brevets français n°2 454 141 et allemand n° 2 929 833, on connaît un procédé permettant la détermination de l'encrassement d'un appareil de traitement du type considéré, et de commande de son nettoyage lorsque l'encrassement a atteint un seuil déterminé. Ce procédé, tel que décrit dans le brevet français n° 2 454 141,comprend la mesure du débit du fluide traité, la mesure ou le calcul en continu d'une grandeur caractéristique du courant ou du déroulement du traitement,cette grandeur caractéristique pouvant être une perte de charge dans la totalité ou une partie d'une zone de l'appareil,le coefficient global d'échange de chaleur,etc., puis la comparaison de la valeur mesurée ou calculée à une valeur théorique correspondant au même débit mesuré en l'absence d'encrassement, la comparaison permettant une détermination du degré d'encrassement de l'appareil.

Ce document décrit donc un procédé qui détermine le point final d'un traitement et commande alors le nettoyage de l'appareil,mais il ne suggère aucunement la variation des paramètres caractéristiques du traitement en fonction du degré d'encrassement ainsi déterminé.

L'invention concerne un procédé qui optimise les traitements des produits fluides qui circulent de façon continue dans un organe ayant une section de passage qui varie par encrassement au cours du traitement.

Plus précisément, selon l'invention, le degré d'encrassement de l'appareil est déterminé et on règle le chauffage à une valeur telle que, pour le degré d'encrassement déterminé,le traitement a l'efficacité prédéterminée voulue. Ainsi,le traitement n'est pas réalisé avec une efficacité excessive , si bien que l'encrassement de l'appareil est ralenti. Le traitement peut donc être réalisé sur une période plus longue, sans que l'efficacité soit réduite.

L'invention concerne un procédé selon le revendication 1

Le degré d'encrassement est avantageusement mesuré par mise en oeuvre du procédé décrit dans le brevet français précité n° 2 454 141. Le traitement selon l'invention est un traitement thermique d'un fluide et la détermination d'au moins un paramètre du traitement comprend : la mesure d'au moins une température et d'un débit, le calcul,d'après le degré d'encrassement, du profil de température dans une zone de traitement, le calcul, d'après le profil de température, le débit et des données propres au produit alimentaire, des temps de séjours du produit dans les diverses parties de la zone de traitement, le calcul de l'efficacité correspondante, et la comparaison de l'efficacité calculée à l'efficacité prédéterminée.

Il est avantageux que cette évaluation soit réalisée après mesure de plusieurs températures en plusieurs points de l'appareil.

Lorsque le traitement est un chauffage assuré par circulation d'un fluide autre que le produit à traiter, le paramètre du traitement est la température de ce fluide de chauffage.

Il est avantageux que la mise en oeuvre du procédé soit interrompue lorsqu'un second paramètre atteint une limite prédétrrminée. Ce second paramètre peut être la température du produit traité à un emplacement de la zone de traitement. Il peut aussi s'agir de la température au fluide de chauffage.

D'autres caractéristiques et avantages de l'invention ressortiront mieux de la description qui va suivre, faite en référence aux dessins annexés sur lesquels :

la figure 1 est un diagramme synoptique illustrant les principales étapes de la mise en oeuvre du procédé selon l'invention ;

la figure 2 est un schéma d'un appareil de stérilisation dans lequel est mis en oeuvre un exemple de procédé selon l'invention ; et

la figure 3 est un graphique représentant les variations, en fonction du temps, de la température de traitement et de l'efficacité dans le cas d'un procédé classique (traits interrompus) et d'un procédé selon l'invention (traits continus).

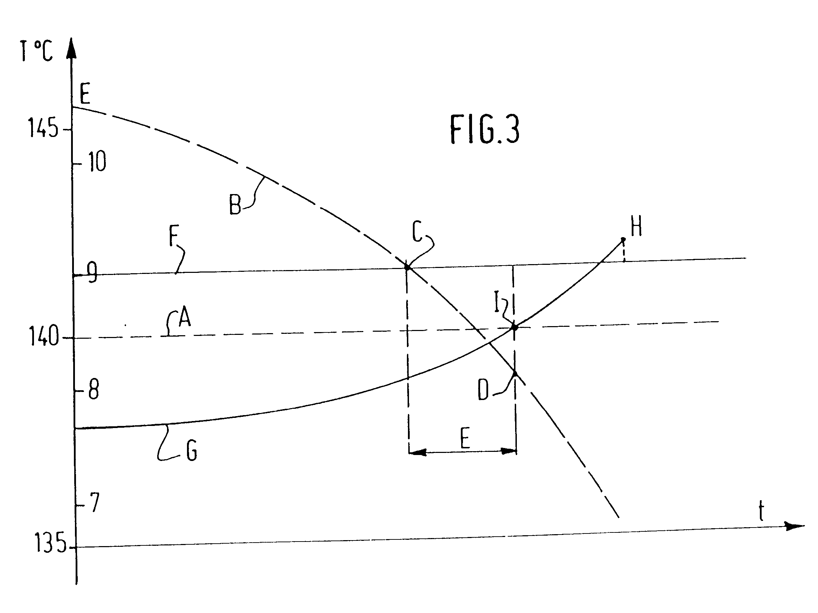

On considère d'abord la figure 3 qui permet de comprendre facilement les caractéristiques de l'invention.

Dans un traitement classique, la température de traitement est déterminée au préalable afin qu'elle donne l'efficacité voulue. Cette température est maintenue ensuite pendant toute la durée du traitement, comme l'indique la courbe A. Etant donné que cette température est relativement élevée, l'encrassement de l'appareil est favorisé si bien que le transfert de chaleur vers le fluide à traiter diminue proressivement et la section de passage diminue aussi. Comme le débit est maintenu à une valeur constante, le temps de séjour diminue aussi. En conséquence, l'efficacité du traitement diminue progressivement, comme l'indique la courbe B. Au point C de la courbe B, cette efficacité est tombée par exemple à une valeur égale à 9 qui est la valeur voulue. Normalement, le traitement devrait être interrompu au point C. Cependant, la plupart du temps, il est poursuivi un certain temps, jusqu'à un point D auquel l'efficacité a été réduite et est par exemple égale à 8 seulement. Dans la zone E comprise entre les points C et D, le risque de fabrication d'un produit non stérile augmente donc. Après le point D, l'efficacité diminue trop rapidement pour que le traitement puisse être poursuivi.

Selon l'invention, le paramètre fixé est l'efficacité du traitement, comme l'indique la courbe F. Le paramètre qui est régulé de manière que cette efficacité soit conservée est la température de traitement indiquée par la courbe G. On note que, pendant la plus grande partie du traitement, cette température reste nettement inférieure à la température utilisée dans le traitement classique et représentée par la courbe A. En conséquence, l'encrassement de l'appareil est nettement moins important et est beaucoup plus progressif. Bien entendu, l'efficacité est inférieure à celle qui est obtenue dans le traitement classique, mais elle est suffisante puisqu'elle correspond à la valeur nominale fixée au départ. Lorsque la courbe G atteint le point I, la température du traitement selon l'invention est égale à celle qui est utilisée dans le traitement classique. Cependant, l'encrassement de l'appareil est beaucoup plus réduit et donne une efficacité encore égale à 9 alors que, dans le procédé classique, cette efficacité est déjà tombée à 8 par exemple. Etant donné le moindre encrassement, le traitement peut être poursuivi par exemple jusqu'au point H. A ce point, l'encrassement de l'appareil est sensiblement équivalent à celui qui correspond au point D du traitement classique. On note donc que le temps de traitement et en conséquence la quantité de fluide traité, ont été accrus de toute la plage comprise entre les points D et H. En outre, le produit traité a toujours subi un traitement ayant une efficacité égale à 9 et est donc entièrement stérile, alors que le produit traité jusqu'au point D dans le procédé classique n'a subi qu'un traitement d'efficacité réduite vers la fin du processus.

On peut aussi comparer les deux procédés aux points C et I qui se correspondent. En effet, ces deux points correspondent à une même température de traitement et à une même efficacité égale à 9: l'encrassement est donc le même au point C, dans le traitement classique, et au point I, dans le traitement selon l'invention. On note donc que l'invention permet un allongement du temps de traitement correspondant à toute plage comprise entre les points C et 1.

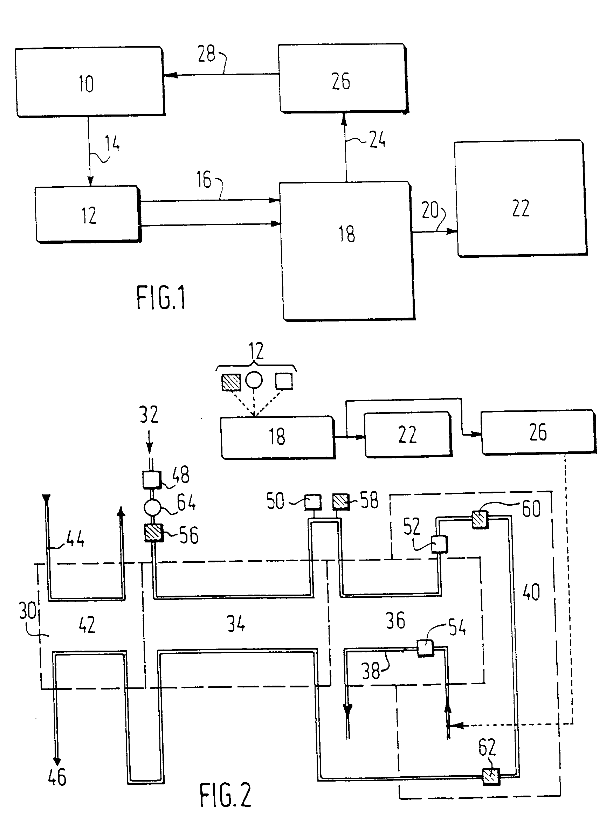

Sur la Figure 1, la référence 10 désigne de façon schématique l'appareil ou installation de traitement du fluide qui circule en formant un courant continu. Des capteurs 12, associés à l'installation, effectuent une mesure 14 de divers paramètres tels que pression, températures, débit, etc. Les résultats 16 sont transmis à un organe 18. Celui-ci, comme décrit plus en détail en référence à la Figure 2, détermine d'abord un degré d'encrassement. Il détermine ensuite le profil de température dans l'appareil, en fonction de la température mesurée en plusieurs points et l'encrassement. Il calcule ensuite la distribution des temps de séjour en fonction de données propres au produit traité, par exemple la viscosité de celui-ci, cette distribution des temps de séjour étant une fonction de la température et de l'encrassement. Il détermine enfin l'efficacité du traitement obtenu en fonction des résultats obtenus, compte-tenu de l'action de la température sur les microorganismes à détruire.

Les différents paramètres obtenus 20 peuvent être transmis à un dispositif 22 d'affichage dont dispose un opérateur.

Lorsque l'efficacité déterminée par le circuit 18 s'écarte de la valeur de consigne, le circuit transmet un ordre 24 à 'un organe 26 de commande qui, par une action 28, modifie un paramètre du traitement dans l'installation 10, afin que l'efficacité revienne vers la valeur de consigne.

Bien qu'on ait indiqué,sur la figure 1, une boucle de commande qui se referme par l'intermédiaire d'un organe 26 de commande, il faut noter que, à l'aide de l'efficacité indiquée par l'appareil d'affichage 22 ou même de paramètres permettant le calcul de cette efficacité, l'opérateur commande directement l'appareil 10, sans organe intermédiaire 26. En effet, les variations des paramètres de traitement sont suffisamment lentes pour qu'un opérateur puisse s'en charger lui-même.

La figure 2 représente un exemple d'appareil mettant en oeuvre le procédé selon l'invention. Il s'agit d'un appareil de stérilisation de lait, portant la référence générale 30. Le fluide à traiter est transmis en 32 à une série de capteurs décrits dans la suite, et pénètre dans une zone 34 de récupération de chaleur. Dans cette zone, le lait introduit est échauffé par le lait qui a subi le traitement. Après passage au niveau de capteurs décrits dans la suite, le lait parvient à une zone 36 de chauffage dans laquelle est effectué le traitement, par échange de chaleur avec un circuit de chauffage 38. Le lait quitte ensuite cette zone et pénètre dans une zone 40 de chambrage. Ensuite, il est transmis à la zone 34 de récupération de chaleur dans laquelle il restitue de la chaleur au courant introduit de lait. Ensuite, le lait parvient à une zone 42 de refroidissement dans laquelle le lait échange de la chaleur avec un circuit 44 d'un fluide de refroidissement. Le lait transmis par la sortie 46 est stérilisé et peut être placé dans des récipients stériles.

L'installation qui, jusqu'à présent, est tout a fait classique, comporte un certain nombre de capteurs permettant sa mise en oeuvre selon l'invention.

Plus précisément, l'installation comporte quatre capteurs de température placés à l'entrée du produit 48, entre les zones de récupération de chaleur et de chauffage 50, entre les zones de chauffage et de chambrage 52 et dans le circuit de chauffage 54. Des capteurs de pression sont placés à l'entrée 56, entre les zones de récupération de chaleur et de chauffage 58, entre les zones de chauffage et de chambrage 60 et à la sortie de la zone de chambrage 62. Enfin, un capteur de débit 64 est monté à l'entrée de l'installation.

Tous les signaux des divers capteurs 48 à 64 sont transmis au circuit 18 décrit en référence à la figure 1, comme l'indique collectivement la référence 12. Dans le mode de réalisation représenté, on note que l'organe de commande 26 agit sur le circuit de chauffage 38, c'est-à-dire sur la température du fluide de chauffage, déterminée par le capteur 54.

Selon l'invention, le circuit 18 détermine l'encrassement dans chacune des zones qui y sont les plus sensibles, c'est-à-dire la zone 34 de récupération de chaleur, la zone 36 de chauffage et la zone 40 de chambrage. Les capteurs 56 et 58, 58 et 60, 60 et 62, pris par paire, permettent la détermination de la perte de charge dans chacune des zones de traitement et en conséquence de la variation du degré d'encrassement de chacune de ces zones. Les températures mesurées à l'entrée, entre les zones de récupération de chaleur et de chauffage et à la sortie de la zone de chauffage permettent la détermination du profil de température et en conséquence le calcul de l'efficacité, compte tenu du degré d'encrassement et du temps de séjour, déterminés d'après le débit donné par le capteur 64. En conséquence, tous les capteurs, sauf le capteur 54, donnent des informations au circuit 18 si bien que celui-ci peut élaborer le signal de commande de l'organe 26 qui fait varier la température du circuit 38 de chauffage. Cette température est donc le paramètre régulé. Cette régulation est vérifiée à l'aide du capteur 54 de température.

Le degré d'encrassement des différentes parties de l'appareil est déterminé par comparaison, comme décrit dans le brevet français précité n° 2 454 141. Le profil de température est déterminé simplement à l'aide des mesures des capteurs 48, 50 et 52. Le calcul des temps de séjour est exécuté à l'aide d'informations relatives à l'appareil, préalablement introduites dans le circuit 18, et d'informations relatives au produit traité, le lait dans l'exemple considéré. Une information importante est notamment la viscosité du lait. Une fois connus les temps de séjour dans les différentes parties de l'appareil et les températures, le circuit 18 calcule l'efficacité du traitement d'après la formule :

$$E = \int_o^t dt_i / DT_i$$

dans laquelle $dt_i$ désigne chaque intervalle de temps élémentaire, $T_i$ la température de l'élément de volume considéré se trouvant à cette température, et D est le temps de réduction décimale, donné par la formule suivante :

$$2,303/D = A.\exp(-E_a/R.T)$$

dans laquelle A est une constante exprimée en $s^{-1}$, $E_a$ est l'énergie d'Arrhénius exprimée en $J.mol^{-1}$, caractéristique des micrporganismes considérés, R est la constante des gaz parfaits et T est la température absolue.

On note ainsi que l'invention présente des avantages importants par rapport à la technique antérieure. D'abord, étant donné que la température de traitement est réduite autant que possible, l'installation permet des économies de chauffage, c'est-à-dire d'énergie. Ensuite, l'encrassement des appareils est ralenti, si bien que les nettoyages qui sont difficiles et coûteux, peuvent être espacés. Enfin, dans le cas des produits alimentaires, l'utilisation d'une plus basse température réduit notablement les modifications organoleptiques (odeur, couleur, goût, arôme, texture) et nutritives des produits chauffés.

## Revendications

1.Procédé de conduite du traitement thermique d'un produit fluide, notamment du lait, circulant dans un organe dont la section de passage varie par encrassement au cours du traitement, ce qui influence le temps de séjour et la température dudit fluide dans cet organe,
caratérisé en ce que :

a/ - on fixe préaleblement une valeur prédéterminée de l'efficacité E du traitement,

b/ - on détermine de manière connue le degré de l'encrassement dans les zones d'encrassement dudit organe,

c/ - on en déduit le temps de séjour d'après les informations connues sur l'appareil et le produit traité,

d/ - on mesure la température dans les zones d'encrassement,

e/ - on calcule la valeur réelle de l'éfficacité E d'après les informations tirées des mesures du temps de séjour et de la température selon la formule

$$E = \int_o^t dt_i / DT_i$$

f/ - on compare cette valeur calculée à la valeur prédéterminée précitée,

g/ - et on agit sur la commande du chauffage pour ajuster l'efficacité à la valeur prédéterminée en a/.

2. Procédé selon la revendication 1,caractérisé en ce que la détermination du degré d'encrassement comprend la mesure en continu du débit du produit fluide, la mesure ou le calcul en continu d'une grandeur caractéristique du courant ou du déroulement du traitement, cette grandeur caractéristique étant sensible à l'encrassement, et la comparaison de la grandeur ainsi mesurée ou calculée à une valeur théorique établie en fonction du débit mesuré et correspondant à ce débit en l'absence d'encrassement de l'appareil .

3. Procédé selon la revendication 2, caractérisé en ce que la grandeur caaractéristique est la perte de charge dans la totalité ou une partie d'une zone de traitement .

4.Procédé selon la revendication 2,dans lequel le traitement est réalisé par un fluide de chauffage, caractérisé en ce que ladite grandeur caractéristique est le coefficient global d'échange de chaleur entre le fluide traité et le fluide de chauffage.

5. Procédé selon la revendication 1,caractérisé en ce qu'il comprend la mesure de plusieurs températures à plusieurs emplacements de la zone de traitement.

6. Procédé selon l'une quelconque des revendications précédentes, caractérisé en. ce qu'il comporte en outre l'interruption du traitement lorsqu'un second paramètre atteint une limite prédéterminée.

7. Procédé selon la revendication 6,caractérisé en ce que le second paramètre est la température du produit alimentaire à un emplacement déterminé de la zone de traitement.

8. Procédé selon la revendication 6,caractérisé en ce que le second paramètre est aussi la température du fluide de chauffage.

## Patentansprüche

1. Verfahren zur Durchführung der thermischen Behandlung eines flüssigen Produkts, insbesondere Milch, die in einem Maschinenteil zirkuliert, dessen Durchgangsquerschnitt durch Verschmutzung im Laufe der Behandlung variiert, was Verweilzeit und Temperatur der Flüssigkeit, in dem Maschinenteil beeinflußt, dadurch gekennzeichnet, daß

a) im vorhinein ein vorbestimmter Wert für die Wirksamkeit E der Behandlung festgelegt wird,

b) der Verschmutzungsgrad in den verschmutzten Bereichen des Maschinenteils in bekannter Weise bestimmt wird,

c) die Verweilzeit anhand bekannter Informationen über Vorrichtung und behandeltem Produkt abgeleitet wird,

d) die Temperatur in den verschmutzten Bereichen gemessen wird,

e) der wirkliche Wert für die Wirksamkeit E nach den aus Messungen von Verweilzeit und Temperatur gewonnenen Informationen gemäß der Formel

$$E = \int_0^t dt_i / DT_i$$

berechnet wird,

f) der berechnete Wert mit vorerwähntem vorbestimmtem Wert verglichen wird, und

g) die Regelung der Heizung so beeinflußt wird, daß die Wirksamkeit auf den in a) vorbestimmten Wert eingestellt wird.

2. Verfahren nach Anspruch 1, dadurch gekennzeichnet, daß die Bestimmung des Verschmutzungsgrades umfaßt: Die kontinuierliche Messung der Durchflußmenge des flüssigen Produkts, die kontinuierliche Messung oder Berechnung einer Kenngröße für den Verlauf oder Ablauf der Behandlung, wobei diese Kenngröße von der Verschmutzung abhängt, und den Vergleich der so gemessenen oder berechneten Größe mit einem theoretischen Wert, bestimmt in Abhängigkeit von der gemessenen Durchflußmenge und entsprechend der Durchflußmenge bei Abwesenheit von Verschmutzungen der Vorrichtung.

3. Verfahren nach Anspruch 2, dadurch gekennzeichnet, daß die Kenngröße der Druckabfall in der Gesamtheit oder einem Teil einer Behandlungszone ist.

4. Verfahren nach Anspruch 2, wobei die Behandlung mittels einer Heizflüssigkeit durchgeführt wird, dadurch gekennzeichnet, daß die Kenngröße der Gesamtwärmeaustauschkoeffizient zwischen behandelter Flüssigkeit und Heizflüssigkeit ist.

5. Verfahren nach Anspruch 1, dadurch gekennzeichnet, daß es die Messung mehrerer Temperaturen an mehreren Stellen der Behandlunsgzone umfaßt.

6. Verfahren nach irgendeinem der vorstehenden Ansprüche, dadurch gekennzeichnet, daß es des weiteren die Unterbrechung der Behandlung umfaßt, wenn ein zweiter Parameter einen vorbestimmten Grenzenwert ereicht.

7. Verfahren nach Anspruch 6, dadurch gekennzeichnet, daß der zweite Parameter die Temperatur des Nahrungsmittels an einer bestimmten Stelle der Behandlungszone ist.

8. Verfahren nach Anspruch 6, dadurch gekennzeichnet, daß der zweite Parameter auch die Temperatur der Heizflüssigkeit ist.

## Claims

1. A process for the control of the thermical treatment of a fluid product, such as milk, circulating within a component, the passage cross-section of which varies on account of soiling in the course of the treatment, this influencing the dwell time as well as the temperature of said fluid in this component, characterised in that :

a) a predetermined value of the treatment efficiency is previously fixed,

b) the degree of soiling in the soiling zones of said component are calculed ina known manner,

c) the dwell time is inferred from known informations on the apparatus and on the treated product,

d) the temperature is measured in the soiling zones,

e) the real value of the efficiency E is calculated with informations obtained on the dwell time measures and on temperatures with the formula :

$$E = \int_{o}^{t} dT_i \, /DT_i$$

f) this calculated value is compared to said predetermined value,

g) and the heating control is activated in order to set the efficiency to the predermined value fixed in a).

2. The process a claimed in claim 1, characterised in that the determination of the degree of soiling comprises the continuous measurement of the flow rate of the fluid product, the measurement or the calculation, on a continuous basis, of a quantity characteristic of the flow or of the progress of the treatment, this characteristic quantity being sensitive to the soiling, and the comparaison of the quantity thus measured or calculated with a theoretical value established as a function of the measured flow rate and corresponding to this flow rate in the absence of soiling of the a apparatus.

3. The process as claimed in claim 2, characterised in that the characterised quantity is the loss of charge in the whole or a part of a treatment zone.

4. The process as claimed in claim 2, characterised in that the treatment is carried out by a heating fluid, characterised in that said characterised quantity is the global coefficient of heat exchange between the treated fluid and the heating fluid.

5. The process as claimed in claim 1, characterised in that it comprises the measurement of a plurality of temperatures at a plurality of locations of the treatement zone.

6. The process as claimed in any one of the preceding claims, characterised in that it further comprises the interruption of the treatment when a second parameter reaches a predetermined limit.

7. The process as claimed in claim 6, characterised in that the second parameter is the temperature of the food product at a determined location of the treatment zone.

8. The process as claimed in claim 6, characterised in that the second parameter is also the temperature of the heating fluid.

FIG.1

FIG.2

FIG.3